# EUROPÄISCHE PATENTSCHRIFT

(11) **EP 0 711 698 B1**
(45) Veröffentlichungstag und Bekanntmachung des Hinweises auf die Patenterteilung: **12.05.1999**
(21) Anmeldenummer: 95117401.0
(22) Anmeldetag: 06.11.1995
(51) Int. Cl.: B62B 5/00, B60P 7/00, B62D 1/12, B62B 5/02, B62B 5/06

(54) **Verteiler-bzw. Zustellerwagen**
Distribution or transport trolley
Véhicule de distribution ou de transport

(30) Priorität: 14.11.1994 DE 4440659; 17.05.1995 DE 19518087
(43) Veröffentlichungstag der Anmeldung: 15.05.1996
(73) Patentinhaber: EXPRESSO DEUTSCHLAND TRANSPORTGERÄTE GmbH, D-34123 Kassel (DE)
(72) Erfinder: Kratzenberg, Wolfgang, D-34270 Schauenburg (DE); Stein, Siegfried, D-34246 Vellmar (DE)
(74) Vertreter: Schön, Theodor, Patent- und Zivilingenieur

(56) Entgegenhaltungen:
- EP-A- 0 417 326
- EP-A- 0 442 437
- WO-A-94/21505
- CH-A- 114 812
- DE-A- 2 051 686
- DE-U- 9 311 075
- FR-A- 2 561 593
- PATENT ABSTRACTS OF JAPAN vol. 006, no. 113 (M-138) 24. Juni 1982 & JP-A-57 041 256 (SHINKO ELECTRIC CO LTD) 8. März 1982

## Beschreibung

Die Erfindung bezieht sich auf einen Verteiler-bzw. Zustellerwagen, bestehend aus einem aus Rahmenholmen und Quertraversen gebildeten und mit einer einen Griffbügel aufweisenden Lenkeinrichtung ausgestatteten Wagenchassis, welches über eine hintere Bockrollen tragende Laufachse und zwei voneinander unabhängige und um je eine vertikale Achse schwenkbar am Wagenchassis aufgehängte vordere Lenkrollen gegen den Boden abgestützt und mit einem insbesondere kastenartigen Aufbau zur Aufnahme des zu transportierenden Zustell-oder Verteilgutes ausrüstbar ist, wobei wenigstens eine der Rollen seines Fahrwerkes vermittels eines Elektromotors angetrieben ist und diesem eine unter Kontrolle einer Steuereinrichtung stehende stufenlos regelbare Energieversorgung aus einer zugehörigen Energiequelle zugeordnet ist.

Derartige mit einem regelbaren Hilfsantrieb ausgestattete und vorwiegend zum Einsatz als Verteiler-bzw. Zustellerwagen bestimmte Wagen sind in einer Anzahl von Baumustern hergestellt und vorgeführt und dadurch zumindest allen interessierten Kreisen bekannt geworden. Diesen Entwicklungen liegt im allgemeinen der Gedanke zugrunde, die Zustellung bzw. Verteilung größerer Mengen an eine Vielzahl von Empfängern zuzustellender bzw. zu verteilender Materialien oder Mitteilungen und dergl. bei geringstmöglicher körperlicher Belastuung der Zustell- oder Verteilerperson zu bewerkstelligen. Zum Transport des Zustell-oder Verteilgutes bis zur Aushändigung an den Empfänger werden häufig Wagen mit einer kastenförmigen Aufnahme für das Zustell-oder Verteilergut ausgestattet.

Im Rahmen der Verteilung oder Zustellung sind häufig auch größere Mengen zuzustellender Druckschriften oder Pakete und dergl. oder aber auch Zeitungen oder Zeitschriften zu transportieren, woraus ein erhebliches Gewicht des insgesamt zu transportierenden Materials resultiert, was naturgemäß einen entsprechenden Kraftaufwand des Verteilers oder Zustellers beim Schieben oder, bei abschüssiger Fahrbahn auch beim Anhalten des Zusteller-oder Verteilerwagens zur Folge hat. Ausgehend von der Tatsache, daß der Einsatz eines Zusteller-oder Verteilerwagens auch dessen möglichst volle Auslastung voraussetzt, ergibt sich in vielen Fällen aus dessen Einsatz in einem verhältnismäßig großen Zustell-oder Verteilbereich, innerhalb dessen auch mit dem Vorhandensein von Bordsteinkanten und dergl. scharfkantigen Absetzungen zwischen verschiedenen Fahrbahnebenen zu rechnen ist, wobei sich das Problem einer mit einem zumutbaren Krafteinsatz ausführbaren Überwindung derartiger Hindernisse ergibt.
Bei anderen bekannten Bauarten von mit einem elektromotorischen Antrieb oder wenigstens Hilfsantrieb ausgestatteten und gegebenenfalls als Zusteller-oder Verteilerwagen einsetzbaren Wagen ist eine Lenk-und Steuereinrichtung mit einer bewegungsabhängig arbeitenden Regelung der Energieversorgung der Elektromotoren vorgesehen, beispielsweise nach der WO-A-9421505 dahingehend, daß in eine aus zwei relativ zueinander beweglichen Teilen bestehende Lenk-und Steuereinrichtung ein Potentiometer oder dergl. eingeschaltet ist und die vom Benutzer jeweils momentan gewünschte Größe der Antriebsleistung des Hilfsmotors vermittels des Potentiometers aus der Größe der gegenseitigen Verstellung der beiden Teile der Lenk-und Steuereinrichtung erkannt und in eine Regelung der Energieversorgung umgesetzt wird. Diesen Bauarten von mit einem durch den Benutzer mehr oder minder willkürlich regelbaren elektromotorischen Antrieb oder wenigstens Hilfsantrieb ausgestatteten Wagen haftet gleichfalls der Nachteil an, daß eine gefühlvolle Regelung der Antriebsleistung des Hilfsmotors durch den Verteiler oder Zusteller beim Schieben oder, bei abschüssiger Fahrbahn auch beim Anhalten des Zusteller-oder Verteilerwagens kaum möglich ist und daß ferner ein Überwinden von Fahrbahnversetzungen oder stufenförmigen Unebenheiten notwendigerweise zu einer Fehlregelung der Energieversorgung des Hilfsmotors führt.

Der Erfindung liegt daher die Aufgabe zugrunde einen Zustell- bzw. Verteilerwagen der eingangs genannten Bauart dahingehend weiter zu entwickeln, daß er bei guter Eignung zur Aufnahme auch der innerhalb eines größeren Zustell-oder Verteilbereiches anfallenden Menge an Zustell-bzw. Verteilgut mit einem geringstmöglichen wirtschaftlichen und technischen Aufwand herstellbar und im Betrieb leichtgängig verfahr-und manövierbar sowie vor allem auch zum Überwinden von Fahrbahnversetzungen, beispielsweise Bordsteinen, geeignet ist und der darüberhinaus bei langer Lebensdauer einen geringstmöglichen Wartungsaufwand sowie bei großem Aktionsradius einen geringstmöglichen Verbrauch an Energie auskommt.

Diese Aufgabe wird bei einem Verteiler-bzw. Zustellwagen der eingangs genannten Bauart erfindungsgemäß im wesentlichen dadurch gelöst, daß das Fahrwerk des Wagens mit einer Hilfseinrichtung zum Überwinden stufenförmiger Fahrbahnversetzungen ausgestattet ist und eine der beiden Achsen des Wagens als Antriebsachse und die andere als geschleppte Achse ausgebildet ist, wobei der wenigstens einer der Rollen einer Achse zugeordnete Elektromotor durch einen unter Last anlaufenden und drehrichtungsumkehrbaren Elektromotor gebildet ist und wobei die dem Elektromotor zugeordnete Steuereinrichtung gleichzeitig wenigstens einen manuell betätigbaren Hauptschalter zum Ein-und Ausschalten der Energieversorgung und wenigstens eine Regeleinrichtung umfaßt, die gesteuert ist in Abhängigkeit von einem Kraftmesser, der die am Griffbügel angreifende Zug-oder Schubkraft und Lenkkraft erkennt und diese Kräfte in Steuersignale umsetzt. Ein dieserart ausgestatteter Zustell-bzw. Verteilerwagen entlastet den Verteiler zunächst auf ebener Fahrbahn von dem für das Bewegen des Wagens erforderlichen Kraftaufwand, wobei die in Abhängigkeit von der am Griffbügel angreifenden Zug-bzw. Schub-kraft geregelte Energieversorgung des Antriebsmotors nicht nur eine Anpassung der Antriebsleistung an die vom Zusteller bzw. Verteiler beabsichtigte Fahrgeschwindigkeit, sondern auch einen sparsamen Energieverbrauch gewährleistet. Aus der Abhängigkeit der Regelung der Antriebsleistung von der am Griffbügel angreifenden Zug-oder Schubkraft folgt auch, daß auch das Befahren von Steigungsstrecken mit einem geringstmöglichen Energieverbrauch erfolgen kann. Insbesondere ermöglicht die erfindungsgemäße Ausstattung eines Zustell-bzw. Verteilerwagens den vom Zusteller- bzw. Verteiler für das Bewegen des Wagens aufzubringenden Kraftaufwand unabhängig vom Umfang der Beladung, d.h. dem momentanen Gesamtgewicht, des Wagens und unabhängig von Steigungs-oder Gefällestrecken auf ein konstantes Maß einzuregeln, wobei ein gewisser zumutbarer Kraftaufwand durchaus sinnvoll sein kann, um dem Zusteller bzw. Verteiler ein Gefühl für die Fahrbewegung und deren Regelung zu vermitteln.

Der in die Energieversorgung der Antriebsmotoren eingeschaltete, manuell betätigbare Hauptschalter ermöglicht es dem Zusteller bzw. Verteiler den Wagen wahlweise mit oder ohne motorischen Hilfsantrieb zu fahren.
In einer besonderen Ausgestaltungform kann dabei selbstverständlich auch vorgesehen sein, daß zusätzlich zum Hauptschalter auch ein manuell regelbarer Schalter für eine stufenlose Regelung der Energieversorgung des oder der Antriebsmotoren vorhanden ist, der dem Zusteller oder Verteiler eine willkürliche Regelung der Antriebsleistung gestattet. Dabei sind der Hauptschalter und gegebenenfalls der Regelschalter zweckmäßigerweise am Griffbügel angeordnet.

Für die Verwirklichung der Erfindung bieten sich verschiedene Gestaltungformen an, wobei eine bevorzugte Ausgestaltung darin gesehen wird, daß der wenigstens eine oder aber gegebenenfalls auch alle Antriebsmotoren, insbesondere Elektromotoren als Radnabenmotoren ausgebildet sind. Die Ausbildung der Elektromotoren als Radnabenmotoren eröffnet eine Gestaltungfreiheit dahingehend, daß jeder beliebigen Rolle des Wagens ein motorischer Antrieb zugeordnet werden kann, wobei die Energieversorgung beispielsweise eines einer Lenkrolle zugeordneten Elektromotors über Schleifringe in der Lenkrollenaufhängung und die Energieversorgung beispielsweise eines einer Bockrolle zugeordneten und als bürstenloser Elektromotor ausgebildeten Motors durch die als Hohlachse ausgebildete Bockrollenachse erfolgen kann.

Vorzugsweise wird aber vorgesehen werden, daß im Interesse eines sicheren, gleichmäßigen Antriebes auch bei rutschiger Fahrbahnbeschaffenheit zweckmäßigerweise beide der hinteren Bockrollen mit einem Radnabenmotor ausgerüstet sind. Die beiden hinteren Bockrollen sind vorteilhaft an einer durch ein starres Achsrohr gebildeten Hinterachse des Wagens angeordnet, wobei eine von der Beladung des Wagens, bzw einer Lastverteilung der Ladung unabhängig sichere Belastung der Antriebsrollen dadurch erreicht werden kann, daß auch der Batteriekasten im hinteren Bereich des Wagens angeordnet ist.

In einer abgewandelten Verwirklichungsform kann jedoch auch vorgesehen sein, daß den beiden hinteren Bockrollen ein gemeinsamer, vermittels eines Differentiales und Antriebswellen mit jeder der Bockrollen verbundener Antriebsmotor zugeornet ist.

Bevorzugterweise ist die durch die Antriebsmotoren aufzubringende Antriebsleistung jedoch zwangsweise und in Abhängigkeit von der am Griffbügel angreifenden Zug-oder Schubkraft geregelt, wozu in einer einfachen und zweckmäßigen Anordnung vorgesehen ist, daß ein die am Griffbiügel angreifende bzw. ausgeübte, in Wagenlängsrichtung wirkende Zug-oder Schubkraft erfassender und mit einem Abstand zum Griffbügel angeordneter Sensor ein Steuersignal für einen die Stromversorgung für den oder die Elektromotoren beherrschenden bzw. stufenlos steuernden Schalter liefert, derart, daß der Schalter die Stromversorgung in Abhängigkeit von der Größe der in Wagenlängsrichtung an dem Griffbügel angreifenden Zug-oder Schubkraft mehr oder minder stark aufregelt oder zuregelt. Bei einer derartigen Gestaltung der Regelung der Energieversorgung des oder der Antriebsmotoren ist gewährleistet, daß der Zusteller bzw. Verteiler durch eine entsprechende Zug-oder Schubkrafterhöhung oder Verminderung die Fahrgeschwindigkeit beliebig einregeln kann. Im Einzelnen kann der die Zug-oder Schubkraft erfassende und in ein Steuersignal umsetzende Sensor beliebig, z.B. als Kraftmeßdose oder Wegmeßeinrichtung, ausgebildet und entsprechend seiner Gestaltung an einer geeigneten Stelle zwischen Griffbügel und Wagenchassis angeordnet sein. Ferner wird der die Regelung der Energieversorgung des oder der Antriebsmotoren besorgende Schalter zweckmäßigerweise durch eine kleinbauende elektronische Schaltung gebildet sein, was beim Vorhandensein mehrerer Antriebsmotoren zugleich die Möglichkeit einer Einzelansteuerung der Antriebsmotoren eröffnet, z.B. im Sinne einer Antischlupfregelung oder in einer erweiterten Gestaltung auch als Lenkkraftunterstützung, etwa im Sinne einer Lenkbremseinrichtung.
Zur Erzielung einer Antischlupfregelung kann beispielsweise vorgesehen sein, daß die Energieversorgung der einzelnen Antriebsmotoren zusätzlich in Abhängigkeit von einer Drehzahldifferenz zwischen den beiden Rollen einer Achse geregelt wird. Eine derartig ausgebildete Steuerung vermeidet vor allem ein aus einer durch unterschiedliche Griffigkeit der Fahrbahn bedingten Drehzahldifferenz zwischen den beiden Rollen einer Achse restultierendes Moment um die Wagenhochachse und damit eine zu einer ungewollten Lenkbewegung führende Schwenkbewegung der vorderen Lenkrollen.
Zur Erzielung einer Lenkkraftunterstützung kann beispielsweise auch noch vorgesehen sein, daß die beiden Elektromotoren zweier Rollen einer Achse unterschiedlich ansteuerbar sind, derart, daß sie entweder mit unterschiedlichen Drehzahlen einschließlich der Drehzahl null oder aber gegensinnig laufen. Dadurch kann ein Moment um die Wagenhochachse erzeugt werden, welches zu einer gewollten Schwenkbewegung der vorderen Lenkrollen und damit zu einer gewollten Richtungsänderung des fahrenden Wagens führt.

Die Ausbildung des die Regelung der Energieversorgung des oder der Antriebsmotoren besorgenden Schalters als elektronische Schaltung eröffnet zugleich auch noch die Möglichkeit, den oder die Antriebsmotoren zwecks Erzielung oder Erhöhung einer Dauerbremswirkung und gegebenenfalls damit verbundener Energierückgewinnung auf Generatorbetrieb umzuschalten, falls ein hierfür vorgesehener Sensor eine die am Griffbügel ausgeübte Zug-oder Schubkraft übersteigende Eigenbewegungstendenz des Wagens ermittelt.

Die Ausbildung des die Regelung der Energieversorgung des oder der Antriebsmotoren besorgenden Schalters als elektronische Schaltung eröffnet zugleich auch noch die Möglichkeit, den oder die Antriebsmotoren zwecks Erzielung einer Lenkbremswirkung in Abhängigkeit von einem eine am Griffbügel ausgeübte Lenkkraft erkennenden Sensor auf unterschiedliche Drehzahlen einschließlich der Drehzahl Null einzuregeln sowie gegebenenfalls auf gegensinnige Laufrichtung zu schalten.
Der die am Griffbügel ausgeübte Lenkkraft erkennende Sensor ist der Gestaltung des Griffbügels und dessen Verbindung mit dem Wagenchassis entsprechend ausgebildet und angeordnet, derart, daß er beispielsweise eine Drehbewegung des Griffbügels gegenüber seiner Verbindung zum Wagenchassis nach Richtung und Größe erkennen und daraus ein Steuersignal ableiten kann. Dies kann auch durch Erkennen einer Verwindung in der Verbindung zwischen Griffbügel und Fahrzeugchassis nach Größe und Richtung geschehen.
In einer bevorzugten Ausgestaltungsform wird in Verbindung mit einer Ausgestaltung des Griffbügels nach Art eines Fahrradlenkers und einer durch einen einzigen Holm gebildeten Verbindung des Griffbügels mit dem Wagenchassis ein die Verwindung des Holmes nach Richtung und Größe erkennender Sensor verwendet. Neben dieser bevorzugten Ausgestaltungsform kann aber auch vorgesehen sein, daß der Griffbügel als aufragend angeordneter U-förmiger Bügel ausgebildet ist, wobei dann zwei lineare z.B. als Kraftmeßdose oder Dehnungsmeßeinrichtung, ausgebildete und jeweils an einer geeigneten Stelle zwischen Griffbügel und Wagenchassis angeordnete Kraftaufnahmen vorgesehen sind.

Zur Grundausstattung eines erfindungsgemäßen Zustell-oder Verteilerwagens gehört ferner, daß zumindest die hinteren Bockrollen mit zusätzlichen, als Trommelbremsen ausgebildeten Bremsen ausgestattet sind, denen eine Betätigungseinrichtung am Griffbügel zugeordnet ist und deren Betätigungskraftübertragung vermittels Bowdenzug und Handhebel erfolgt. Dabei können die mechanischen Bremsen sowohl als Feststellbremse als auch als Betriebsbremse eingesetzt werden.

In einer ersten Ausgestaltungsform besteht die Einrichtung zum Überwinden von stufenartigen Fahrbahnversetzungen, insbesondere Bordsteinkanten, aus einer den vorderen Lenkrollen gegenüber vorlaufend und zu der durch die Aufstandsebene der Lenk-und Bockrollen gebildeten Fahrebene unter einem Winkel von wenigstens 20° angestellten Rampe sowie im Bereich zwischen Lenk-und Bockrollen des Wagens angeordneten Hilfsrollen, wobei die Rampe innerhalb der lichten Weite eines Stoßbügels angeordnet ist und wobei der Stoßbügel in einer oberhalb der Achse der oberen Umlenkrolle für den Riemen liegenden Ebene angeordnet ist. Als besonders vorteilhaft wird dabei angesehen, daß die Rampe durch einen über zwei in einem Abstand voneinander angeordnete Umlenkrollen geführten Stollenriemen und einem die beiden Umlenkrollen tragenden, gegen das Chassis des Wagens abgestützten Rahmen gebildet ist, in welchen die beiden Umlenkrollen in einer unter einem Winkel von wenigstens 20° gegenüber Fahrebene des Wagens angestellten Ebene gelagert sind und dessen Unterkante parallel zu der Ebene verläuft,in der die beiden Umlenkrollen gelagert sind. Der Stollenriemen ist dabei im Bereich zwischen den beiden Umlenkrollen vermittels entlang der Unterkante des die Umlenkrollen tragenden Rampenrahmens gelagerter Stützrollen gegen diesen abgestützt. Der Rampenrahmen selbst ist mindestens hinterendig über eine Tragkonsole am Chassis des Wagens befestigt, wobei vorgesehen sein kann, daß die den Rampenrahmen mit dem Wagenchassis verbindende Tragkonsole unter Zwischenschaltung einer stoßdämpfenden Einrichtung, insbesondere einer Gummipolstereinrichtung mit dem Wagenchassis verbunden ist.
In einer erweiterten Ausgestaltungsform der Erfindung kann dabei ferner noch vorgesehen sein, daß der in Verbindung mit dem ihm zugeordneten Rampenrahmen die Rampe bildende Stollenriemen vermittels eines einer seiner Umlenkrollen zugeordneten Elektromotores antreibbar ist. Da aber ein ständiger Antrieb des Stollenriemens nicht erforderlich und außerdem zu energieaufwendig ist, ist dabei zweckmäßigerweise weiterhin vorgesehen, daß dem Einschalten der Stromversorgung für den der Umlenkrolle zugeordneten Elektromotor ein in den Riemen oder dessen Abstützung eingeschalteter Druck-oder Zugschalter zugeordnet ist.

Um bei einem Auffahren auf eine stufenartige Fahrbahnversetzung, insbesondere einen Bordstein, heftige Stöße, die zu einer Reaktion am Griffbügel und damit zu einer Verfälschung der von den Sensoren zu erfassenden Größen hinsichtlich der am Griffbügel ausgeübten und tatsächlich beabsichtigten Zug-, Schub- oder Lenkkraft führen könnten, nach Möglichkeit zu vermeiden ist neben einer Zwischenschaltung einer stoßdämpfenden Einrichtung in die Verbindung des Rampenrahmens mit dem Wagenchassis ferner auch eine Ausstattung der Hilfsrollen mit einer stoßdämpfenden Bereifung vergesehen.

Im Einzelnen sind die im Bereich zwischen den Lenk-und den Bockrollen des Wagens angeordneten Hilfsrollen untereinander vermittels einer starren Achse verbunden und vermittels dieser am Chassis des Wagens aufgehängt, wobei der Durchmesser der Hilfsrollen höchstens gleichgroß, vorzugsweise aber kleiner ist als der Durchmesser der Bockrollen und wobei die Achse der Hilfsrollen zu den Lenkrollen einen größeren Abstand hat als zur Achse der Bockrollen.

Nach einer zweiten Ausgestaltungsform eines erfindungsgemäßen Zusteller-bzw. Verteilerwagens kann zum Zwecke der Erleichterung des Überwindens stufenförmiger Fahrbahnversetzungen, insbesondere Bordsteinkanten oder dergl., aber auch vorgesehen sein, daß die angetriebenen Rollen bzw. die angetriebene Achse der in Vorwärtsfahrtrichtung vorne liegenden Laufradachse zugeordnet sind. Durch eine solche Anordnung der angetriebenen Achse kann, ganz unabhängig davon, ob der Wagen als geschobener oder gezogener Wagen benutzt werden soll, die Überwindung von Fahrbahnhindernissen, in einer solchen Weise verbessert werden, daß zumindest für geringere Fahrbahnhindernisse eine als Rampe ausgebildete Einrichtung zum stoßfreien Anheben der Rollen der geschobenen Achse auf die höher liegende Fahrbahnebene entweder insgesamt entfallen oder aber durch eine vergleichsweise einfache und billige Einrichtung ersetzt werden kann. Zudem bringt die Anordnung der angetriebenen Achse als in Fahrtrichtung vorne liegende Achse noch den weiteren Vorteil mit sich, daß bei ungünstigen, insbesondere winterlichen Fahrbahnverhältnissen eine bessere Antriebssicherheit erreicht werden kann. Zugleich ergibt sich aus dem Wegfall der Einrichtung zum stoßfreien Anheben der Rollen der geschobenen Achse auf die höher liegende Fahrbahnebene auch eine Verkürzung der Gesamtbaulänge des Wagens.

In besonders zweckmäßiger Weise ist in Verbindung mit der in Fahrtrichtung vorne liegenden Anordnung der angetriebenen Achse weiterhin vorgesehen, daß die Rollen der angetriebenen Achse größer oder wenigstens gleich groß sind als die Rollen der geschleppten Achse. Bei vorne liegender angetriebener Achse sollte die Rollengröße so groß gewählt werden, daß die Rollendurchmesser größer sind als die üblicherweise zu überwindende Höhe von Fahrbahnhindernissen, wie Bordsteinkanten oder dergl., so daß die Rollen der angetriebenen Achse unter Vermittlung des durch die auf den Wagen ausgeübten Schub-oder Zugkraft bewirkten Andruckes die obere Kante des Fahrbahnhindernisses, z.B. Bordsteines erfassen und "erklimmen" können.

In Verbindung mit einer in Fahrtrichtung vorne liegenden Anordnung der angetriebenen Achse genügt es dann den Rollen der geschleppten Achse eine einfache Einrichtung zum stoßfreien Anheben auf die höhere Fahrbahnebene zuzuordnen. Eine solche Einrichtung kann im einfachsten Fall durch eine Gleitkufe gebildet werden. Die der geschleppten Achse zugeordnete Gleitkufe ist im einfachsten Falle als im Bereich der Wagenlängsmitte angeordneter, starrer Bügel ausgebildet und an dessen Unterseite, dieses nach unten überragende Kufe am Wagenchassis angeordnet, wobei die Kufe den geschleppten Rollen gegenüber vorlaufend ausgebildet ist. Im Interesse einer optimalen Fahrstabililtät des Wagens auch beim Überwinden von Fahrbahnhindernissen ist jedoch zweckmäßigerweise vorgesehen, daß die der geschleppten Achse zugeordnete Gleitkufe wenigstens zwei Kufenbügel umfaßt und der Rollenachse gegenüber soweit vorlaufend beginnt, daß ihre untere Kufenlänge mit einem nur geringen, die gewöhnlichen kleineren Fahrbahnunebenheiten berücksichtigenden Abstand oberhalb der normalen Rollenaufstandsfläche liegt.

Selbstverständlch kann anstelle einer Kufe auch eine den Rollen der geschleppten Achse gegenüber vorlaufend an der Unterseite des Wagenchassis angeordnete Walze oder ein Rollenpaar verwendet werden, wobei die Umfangsßäche der Walze bzw. der Umfang der Rollen des Rollenpaares bei auf ebener Fahrbahn befindlichem Wagen einen geringen den unvermeidlichen kleineren Fahnbahnunebenheiten entsprechenden Abstand zur Fahrbahnebene aufweisen.

Hand in Hand mit einer vorne liegenden Anordnung der angetriebenen Achse des Verteiler-bzw. Zustellerwagens kann dann weiterhin vorgesehen sein, daß das Wagenchassis an seinen beiden Stirnenden mit untereinander gleichen Einrichtungen zum Anschluß eines Griffbügels samt Anschlüssen für die Regelung bzw. Steuerung der Energieversorgung des die Rollen der Antriebsachse antreibenden Elektromotors ausgestattet ist, so daß der Wagen insgesamt ohne besonderen Aufwand sowohl als geschobener als auch als gezogener Wagen ausgerüstet werden kann.

In weiterer Einzelausgestaltung eines Verteiler-bzw. Zustellerwagens mit einer vorstehend angegebenen Achsanordnung kann zu dessen kostenneutraler Ausbildung, wahlweise als gezogener oder geschobener Wagen, aber auch vorgesehen sein, daß das Wagenchassis im Bereich seiner beiden Stirnenden mit untereinander gleichen Einrichtungen zum Anschluß bzw. Anbau einer Antriebsachse ausgestattet ist, wobei eine weitgehende Vereinfachung insbesondere dadurch erreicht wird, daß die Antriebsachse als starre Achse ausgebildet ist und ihr die Bockrollen zugeordnet sind.

Anstelle einer Ausbildung als Starrachse kann hinsichtlich der Rollen der geschleppten Achse nach einer besonders zweckmäßigen Ausgestaltungsform eines erfindungsgemäßen Zusteller-bzw. Verteilerwagens aber auch vorgesehen sein, daß die Rollen durch Lenkrollen gebildet sind, welche vermittels eines Joches um eine zu ihrer Rotationsachse senkrechte Achse schwenkbar am Wagenchassis aufgehängt und mittels einer Feststelleinrichtung wahlweise ihrer Schwenkachse gegenüber vor- oder nachlaufend feststellbar sind. Durch eine solche in Fahrtrichtung 180°-weise Feststellbarkeit von als Lenkrollen installierten Rollen der geschleppten Achse kann zum einen in bestimmten Fahrsituationen, z.B. beim Abfahren von einer Bordsteinkante oder beim Rückwärtsfahren, die Längsstabilität des Wagens erheblich verbessert werden und zum anderen gleichzeitig auch eine willkürlich herbeiführbare Änderung des wirksamen Radstandes des Wagens erreicht werden, was in manchen Fällen, z.B. beim Manövrieren des Wagens, höchst wünschenswert ist. Eine besonders praktische Gestaltungsweise könnte hierfür darin gesehen werden, daß der Feststellung der Lenkrollen der geschleppten Achse in ihrer ihrer Schwenkachse gegenüber vor-oder nachlaufenden Stellung eine aus einem am Griffbügel angeordneten Handhebel und Übertragungsmitteln, insbesondere Bowdenzügen, bestehende fernbedienbare Betätigungseinrichtung zugeordnet ist.

Anstelle einer gesonderten manuellen Betätigung der Arretierung der Rollen der geschleppten Achse in einer in Fahrtrichtung ausgerichteten, ihrer Schwenkachse gegenüber vor-oder nachlaufenden Stellung kann naturgemäß auch vorgesehen sein, daß die Feststellung der Lenkrollen der geschleppten Achse in ihrer jeweiligen, ausgerichteten Stellung selbsttätig, insbesondere in Abhängigkeit von den am Griffbügel ausgeübten, quergerichteten Lenkkräften selbsttätig einIs bzw. ausgerückt wird, was beispielsweise mittels einer Blockierung der Schwenlagerung durch ansteuerbare, Elektromagnetschieber oder dergl. bewerkstelligt werden kann.

Von den verschiedenen vorstehend aufgezeigten Ausgestaltungsformen unabgängig wird eine bevorzugte Bauart des Wagenchassis darin gesehen, daß das Wagenchassis einen umlaufenden Ovalrohrrahmen und vermittels eines vorderen und eines hinteren Querträgers an diesen angeschlossene längsgerichtete Profilschienen als Aufstandsfläche die den Wechselaufbau sowie einen an den Ovalrohrrahmen angeschlossenen Batteriekasten und gleichfalls an den Ovalrohrrahmen angeschlossene starre Achsträger für eine bie beiden Bockrollen tragende starre Achse umfaßt, wobei der Batteriekasten in zwei parallel und längsgerichteten L-Profilschienen abgestützt ist, welche ihrerseits vermittels der jeweils starren Achsträger für die den Bockrollen und die den Hilfsrollen zugeordnete Starrachse gegen den Ovalrohrrahmen abgestützt sind. Im Interesse eines möglichst geringen Eigengewichtes des Wagens sind dabei alle Teile des Wagenchassis aus Zuschnitten von Aluminiumprofilen, soweit es Rahmenteile sind, oder, beispielsweise hinsichtlich der Achsträger, durch Aluminiumformteile gebildet.

Die Erfindung ist in der nachfolgenden Beispielsbeschreibung anhand einiger in der Zeichnung dargestellter Ausführungsbeispiele im Einzelnen beschrieben.

In der Zeichnung zeigt die
- Figur 1: eine Stirnansicht des Chassis für einen Verteiler- bzw. Zustellerwagen;

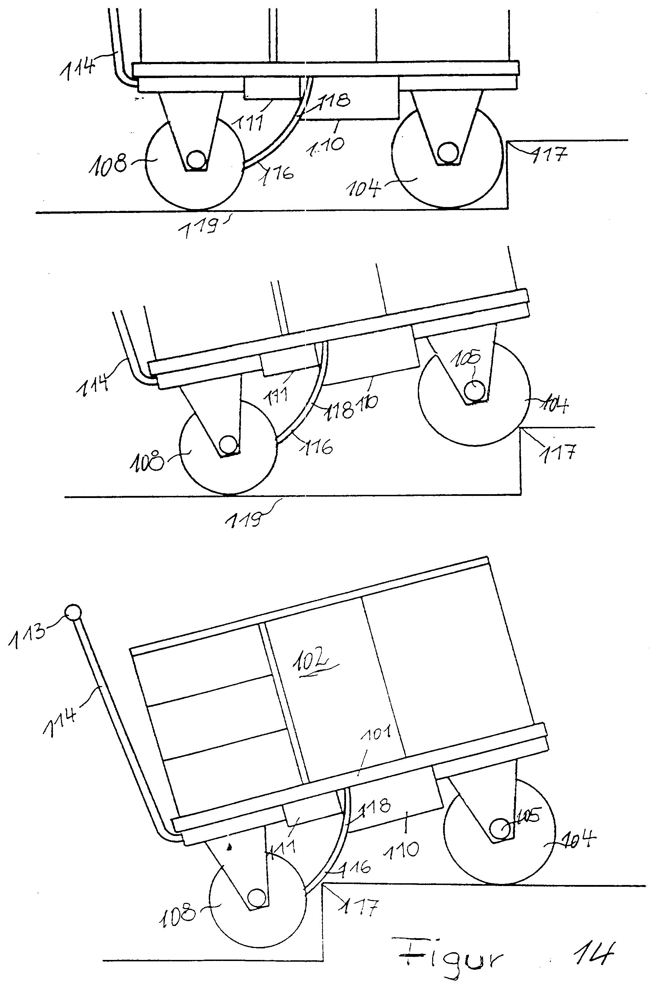

- Figur 2: eine Seitenansicht des Chassis für einen Verteiler- bzw. Zustellerwagen beim Überwinden einer Fahrbahnversetzung;
- Figur 3: eine schematische Schnittdarstellung des Chassis für einen Verteiler-bzw. Zustellerwagen;
- Figur 4: eine Seitenansicht eines mit einem Wechselaufbau ausgestatteten Verteiler- bzw. Zustellerwagens;
- Figur 5: eine Seitenansicht eines mit einem Wechselaufbau ausgestatteten Verteiler-bzw. Zustellerwagens beim Überwinden einer Fahrbahnversetzung;
- Figur 6: eine ausschnittweise schaubildliche Rückansicht des Verteiler- bzw. Zustellerwagens nach Figur 1 bis 5 im vergrößerten Maßstab;
- Figur 7: eine weitere ausschnittweise schaubildliche Rückansicht des Verteiler- bzw. Zustellerwagens nach Figur 1 bis 5 gleichfalls im vergrößerten Maßstab;
- Figur 8: eine ausschnittsweise Seitenansicht des vorderen bereiches des Fahrwerkes eines Verteiler- bzw. Zustellerwagens nach Figur 1 bis 7 im vergrößerten Maßstab;

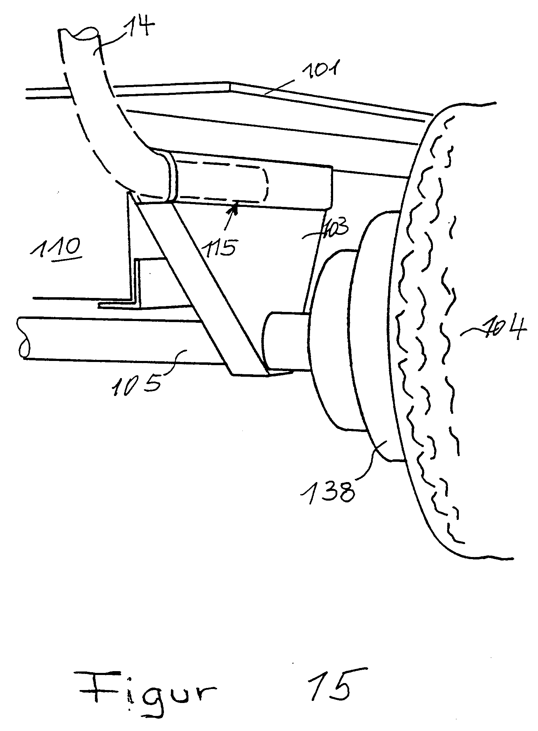

- Figur 9: eine teilweise und schaublildliche Einzelansicht des Griffbügels im vergrößerten Maßstab;
- Figur 10: eine Seitenansicht einer abgewandelten Verwirklichungsform eines Verteiler-bzw. Zustellerwagens mit zwei starren Achsen;
- Figur 11: eine Seitenansicht eines Verteiler-bzw. Zustellerwagens der Verwirklichungsform nach Figur 10 mit einer starren Achse und zwei Lenkrollen;
- Figur 12: eine Seitenansicht einer abgewandelten Ausführungsform eines Verteiler-bzw. Zustellerwagens nach Figur 10 mit zwei starren Achsen;
- Figur 13: eine Stirnansicht eines Verteiler-bzw. Zustellerwagensnach Figur 12 ;
- Figur 14: eine schematische Darstellung eines Verteiler-bzw. Zustellerwagens nach Figur 10 beim Überwinden einer Bordsteinkante.
- Figur 15: eine schaubildliche Darstellung einer Einzelheit.

Das Chassis des in der Zeichnung dargestellte Verteiler-bzw. Zustellerwagens besteht im wesentlichen aus einem umlaufenden, in der Draufsicht U-förmigen Ovalrohrrahmen 1, an den einerseits aus zwei parallelen Profilmaterialabschnitten gebildete, Aufstandsflächen für einen Wechselaufbau 2 bildende Träger 3 und 4 und andererseits Achsträger 13 für eine starre Bockrollenachse 5 sowie vermittels eines Querträgers 6 die die den vorderen Lenkrollen 66 zugeordneten Lenkrollenaufhängungen bildenden Joche 14 angeschlossen sind. An den Ovalrohrrahmen 1 ist weiterhin vermittels einer Klemmhülse 7 höhenverstellbar ein Griffbügel 8 angeschlossen. Ferner ist der Verteiler-bzw. Zustellerwagen mit einer vermittels Seilzüge 11 betätigbaren Trommel-Bremsanlage 12 ausgestattet.

Die die zwei Bockrollen 44 tragende Laufradachse 5 ist im gezeigten Ausführungsbeispiel durch einen starren Rohrmaterialabschnitt gebildet und vermittels zweier Achsträger 13 am Wagenchassis befestigt. Die beiden Lenkrollen 66 sind jeweils vermittels eines Joches 14 um eine vertikale Achse schwenkbar am Wagenchassis aufgehängt. In einem in einer durch zwei zueinander parallel gerichtete L-Profile 155 gebildeten Einschubhalterung 15 des Wagenchassis ist in einem Batteriekasten 166 ein Satz Batterien oder Akkumulatoren 16 aufgenommen. Neben dem Batterie- oder Akkumulatorensatz 16 ist ferner eine elektronische Steuerschaltung 17 untergebracht, wobei die Steuerschaltung 17 die Regelung der Energieversorgung von den Bockrollen 44 zugeordneten und als Radnabenmotoren ausgebildeten, unter Last anlaufenden sowie drehrichtungsumkehrbaren Elektromotoren 18 übernimmt und mit diesen über Steuer-und Versorgungsleitungen 19 verbunden ist. Der Signalerzeugung für die Steuerschaltpung 17 ist eine Reihe von Sensoren zugeordnet, von denen lediglich eine schematische Darstellung in Form eines Gehäuses 20 gezeigt ist, wobei das Gehäuse 20 an einem den Griffbügel 8 mit dem Wagenchassis verbindenden Holm 21 angeordnet ist. Der Holm 21 ist im gezeigten Ausführungsbeispiel durch ein Vierkant-Profilmaterial gebildet sowie mittig an die aufragenden Enden des Ovalprofil-rahmens 1 des Wagenchassis angeschlossen und trägt oberendig den Griffbügel 8. Der Griffbügel 8 ist nach Art eines Fahrradlenkers mit zwei an jeweils einem gebogenen Ausleger 22 angeordneten Griffen 23 gestaltet und trägt einen der Betätigung der als Trommelbremsen 11 ausgebildeten mechanischen Bremsen zugeordne-ten Bremshebel 24 sowie zumindest einen in der Zeichnung nicht im einzelnen dargestellten Hauptschalter für das Ein-bzw. Ausschalten der Energie-oder Stromversorgung für die Radnaben-motoren 18. Die elektronische Steuerschaltung 17 ist in einer in der Zeichnung zunächst nicht im Einzelnen gezeigten Schaltungs-anordnung so ausgelegt, daß sie die Energieversorgung der Radna-benmotoren 18 zwangsweise und in Abhängigkeit von der am Griff-bügel in Wagenlängsrichtung angreifenden bzw. ausgeübten, durch den oder die im Gehäuse 20 untergebrachten Sensoren gemessenen Zug-oder Schubkraft regelt. Die elektronische Steuerschaltung 17 ermöglicht bei dem im Ausführungsbeispiel gezeigten Wagen zugleich die Einzelansteuerung der Antriebsmotoren 18 im Sinne einer Antischlupfregelung und/oder im Sinne einer Lenkkraftunterstützung in der Art einer Lenkbremseinrichtung, wobei zur Antischlupfregelung vorgesehen ist, daß die Energieversorgung der einzelnen Antriebsmotoren in Abhängigkeit von einer Drehzahldifferenz zwischen den beiden Rollen einer Achse und zur Erzielung einer Lenkkraftunterstützung die beiden Elektromotoren zweier Rollen einer Achse unterschiedlich ansteuerbar sind, derart, daß sie entweder mit unterschiedlichen Drehzahlen einschließlich der Drehzahl null oder aber gegensinnig laufen, wobei die Ansteuerung der beiden Radnabenmotoren in Abhängigkeit von Steuersignalen eines eine am Griffbügel 8 ausgeübte Lenkkraft erkennenden Sensors erfolgt und wobei der Sensor in Verbindung mit einer Ausgestaltung des Griffbügels 8 nach Art eines Fahrradlenkers und einer durch einen einzigen Holm gebildeten Verbindung des Griffbügels 8 mit dem Wagenchassis als die Verwindung des Holmes nach Richtung und Größe erkennender Sensor ausgebildet ist. Das Fahrwerk des in der Zeichnung dargestellten Verteiler-bzw. Zustellerwagens ist zusätzlich mit einer Einrichtung zum Überwinden von stufenartigen Fahrbahnversetzungen, insbesondere Bordsteinkanten 100, ausgestattet, die im Wesentlichen aus einer den vorderen Lenkrollen 66 gegenüber vorlaufend und zu der durch die Aufstandsebene der Lenk-66 und Bockrollen 44 gebildeten Fahrebene unter einem Winkel von wenigstens 20° angestellten Rampe 30 sowie im Bereich zwischen Lenk- 66 und Bockrollen 44 des Wagens angeordneten Hilfsrollen 31 besteht, wobei die Rampe 30 innerhalb der lichten Weite eines der Stirnseite des Wagens gegenüber ausladend und im wesentlichen in Höhe des Wagenchassis angeordneten Stoßbügels 32 angeordnet ist. Die Rampe 30 ist durch einen über zwei in einem Abstand voneinander angeordnete Umlenkrollen 33 geführten Stollenriemen 34 und einem die beiden Umlenkrollen 33 tragenden, gegen das Chassis des Wagens abgestützten Rahmen 35 gebildet ist, in welchen die beiden Umlenkrollen 33 in einer unter einem Winkel von wenigstens 20° gegenüber der Fahrebene des Wagens angestellten Ebene gelagert sind und dessen Unterkante 36 parallel zu der Ebene verläuft, in der die beiden Umlenkrollen 33 gelagert sind. Der Stollenriemen 34 ist dabei im Bereich zwischen den beiden Umlenkrollen 33 vermittels entlang der Unterkante 36 des Rampenrahmens 35 gelagerter Stützrollen 37 gegen diesen abgestützt. Der Rampenrahmen 35 selbst ist hinterendig über eine Tragkonsole 370 am Chassis des Wagens befestigt, wobei die Tragkonsole 370 unter Zwischenschaltung einer stoßdämpfenden Gummipolstereinrichtung 38 mit dem Wagenchassis verbunden ist. Die im Bereich zwischen den Lenk- 66 und den Bockrollen 44 des Wagens angeordneten Hilfsrollen 31 sind untereinander vermittels einer starren Achse 39 verbunden und vermittels dieser am Chassis des Wagens aufgehängt. Der Durchmesser der Hilfsrollen 31 ist hier kleiner ist als der Durchmesser der Bockrollen 44. Ferner ist die Achse 39 der Hilfsrollen 31 zu den Lenkrollen 66 in einen größeren Abstand als zur Achse der Bockrollen 44 angeordnet. Die Hilfsrollen 31 sind mit einer stoßdämpfenden Bereifung 40 versehen. Schließlich ist der Stollenriemen 34 vermittels eines einer seiner Umlenkrollen 33 zugeordneten, in der Zeichnung nicht gezeigten Elektromotores antreibbar und dem Einschalten der Stromversorgung für den der Umlenkrolle 33 zugeordneten Elektromotor ein in den Stollenriemen 34 oder dessen Abstützung eingeschalteter, gleichfalls nicht gezeigter Druck- oder Zugschalter zugeordnet.

Das Chassis der in den Figuren 10 bis 15 der Zeichnung dargestellten Verwirklichungsform eines Verteiler-bzw. Zustellerwagens besteht im Wesentlichen aus einem in der Draufsicht rechteckigen Profilmaterialrahmen 101, an den einerseits in der Zeichnung nicht besonders gezeigte Aufstandsflächen für einen insbesondere als Wechselaufbau 102 gestalteten Aufbau zur Aufnahme des Zusteller-bzw. Verteilergutes und andererseits Achsträger 103 für eine starre, Bockrollen 104 tragende Achse 105 sowie jeweils durch eine Schwenklagerung 106 und ein Joch 107 gebildete Aufhängungen für um eine vertikale Achse 122 schwenkbare Lenkrollen 108 angeschlossen sind. Die durch einen Rohrmaterialabschnitt gebildete starre Achse 105 trägt die mittels jeweils eines unter Last anlaufenden und drehrichtungsumkehrbaren Radnabenmotors 108 angetriebenen Bockrollen 104 und ist in Fahrtrichtung vorne liegend angeordnet. Die die Energieversorgung für die angetriebenen Bockrollen 104 bildenden Batterien oder Akkumulatoren 109 sind in einem etwa mittig unterhalb des Chassisrahmens 101 des Wagens angeordneten Batteriekasten 110 untergebracht, ebenso wie eine elektronische Steuereinheit 111 für die Regelung der Energieversorgung der Radnabenmotoren 108 der angetriebenen Bockrollen 104. Der elektronischen Steuereinheit 111 ist eine Sensoranordnung zugeordnet, welche in einem Gehäuse 112 untergebracht ist, welches seinerseits in einen oberendig den Griffbügel 113 tragenden, aufragenden Holm 114 eingeschaltet ist. Der Griffbügel 113 ist vermittels des Holmes 114 über besondere Aufnahmen 15 an den Chassisrahmen 101 des Wagens angeschlossen, wobei am Chassisrahmen 101 beidendig untereinander gleichartig ausgebildete Aufnahmen 115 angeordnet sind, so daß der den Griffbügel 113 tragende Holm 114 wahlweise an das eine oder andere Ende des Chassisrahmens 101 anschließbar ist, je nach dem ob der Wagen als geschobener oder gezogener Wagen betrieben werden soll. Die in der Fahrrichtung vorne liegenden angetriebenen Bockrollen 104 weisen bei den in der Zeichnung dargestellten Ausführungsbeispielen einen größeren Durchmesser auf, als die die geschleppte Achse bildenden Lenkrollen 108. Zur Erleichterung des Überwindens von Fahrbahnabstufungen, insbesondere von Bordsteinkanten 117 ist den die geschleppte Achse bildenden Lenkrollen 108 bei den Ausführungsformen nach den Figuren 10,11 und 13,14 jeweils eine Gleitkufe 116 zugeordnet, welche vorderendig an der Unterseite des Chassisrahmens 101 des Wagens befestigt ist und deren Kufenbogen 118 sich bis in den Bereich der Rollenaufstandsebene 119 erstreckt, derart, daß (sh. Figur 14) beim Überwinden einer Bordsteinkante 118 die die geschleppte Achse bildenden Lenkrollen 108 im Zuge der Vorwärtsfahrt des Wagens allmählich auf die Höhe der höherliegenden Fahrbahnebene angehoben werden. Die Gleitkufen 116 bestehen im gezeigten Ausführungsbeispiel jeweils aus zwei im Abstand voneinander angeordneten Rundmaterialabschnitten 119, welche im Bereich der Längsmitte des Wagens und den die geschleppte Achse bildenden Lenkrollen 108 gegenüber vorlaufend an den Chassisrahmen 101 angeschlossen und gegebenenfalls hinterendig über vertikale Streben 120 zusätzlich gegen den Chassisrahmen 101 abgestützt sind. Desgleichen können die beiden Rundmaterialabschnitte 119 auch über quergerichtete Streben 121 gegeneinander abgestützt sein. In einer besonderen Ausführungsform sind die die geschleppte Achse bildenden Lenkrollen 108 bezüglich ihrer senkrecht zu ihrer Rotationsachse gerichteten vertikalen Schwenkachse 122 willkürlich und wahlweise in einer dieser gegenüber vorlaufenden oder einer dieser gegenüber nachlaufenden Ausrichtung feststellbar, wozu im gezeigten Ausführungsbeispiel eine mit der Schwenklagerung 106 zusammenwirkende mechanische Arretiereinrichtung 123 vorgesehen ist, welche mittels Bowdenzüge 124, 125 durch einen am Griffbügel 113 angeordneten Betätigungsgriff 126 ein-bzw. ausrückbar ist.

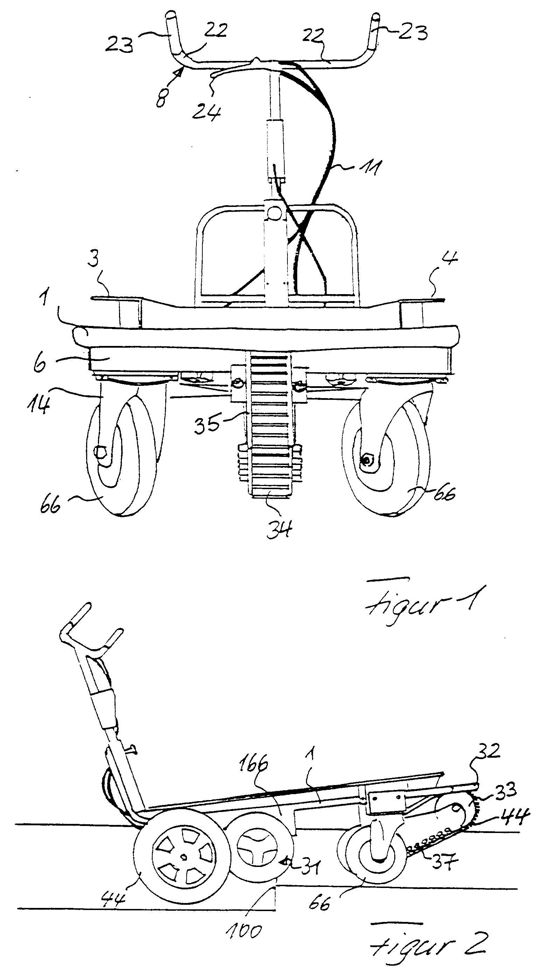

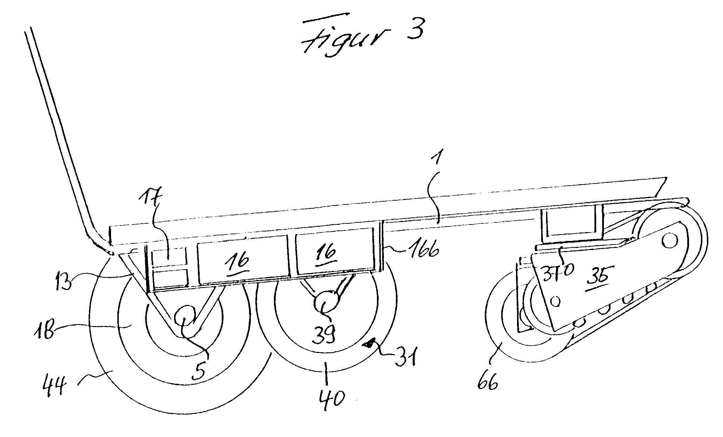

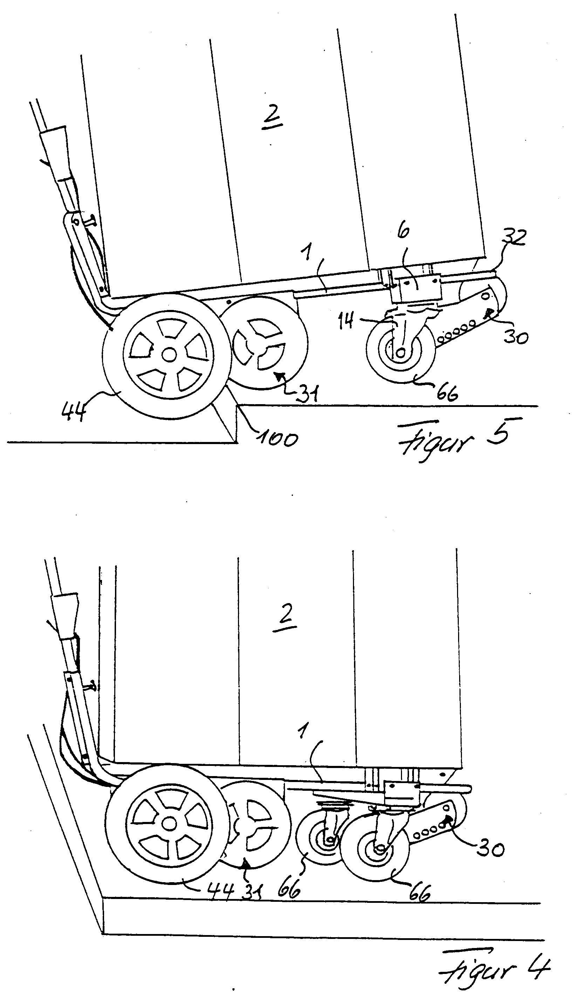

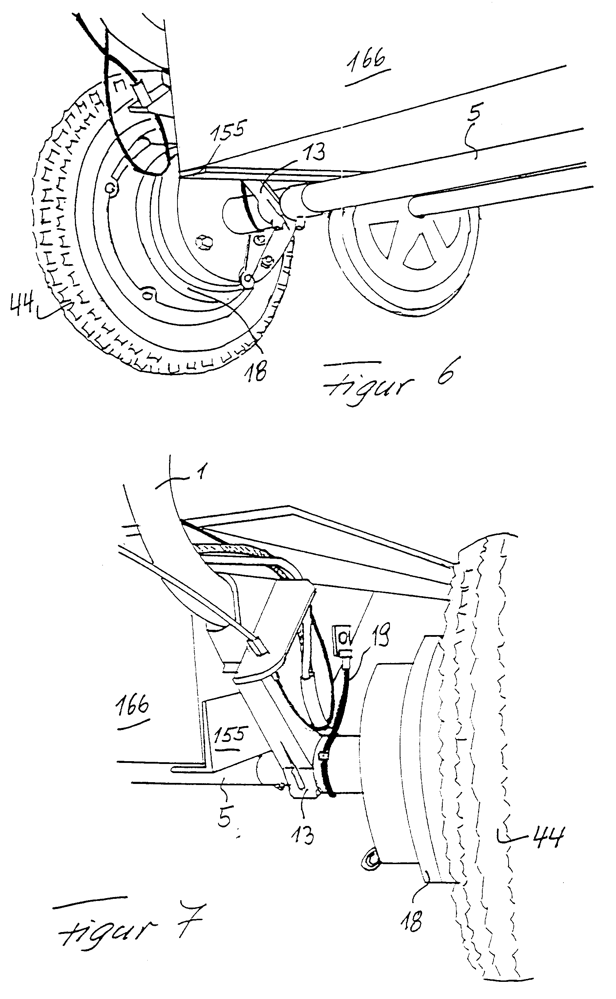

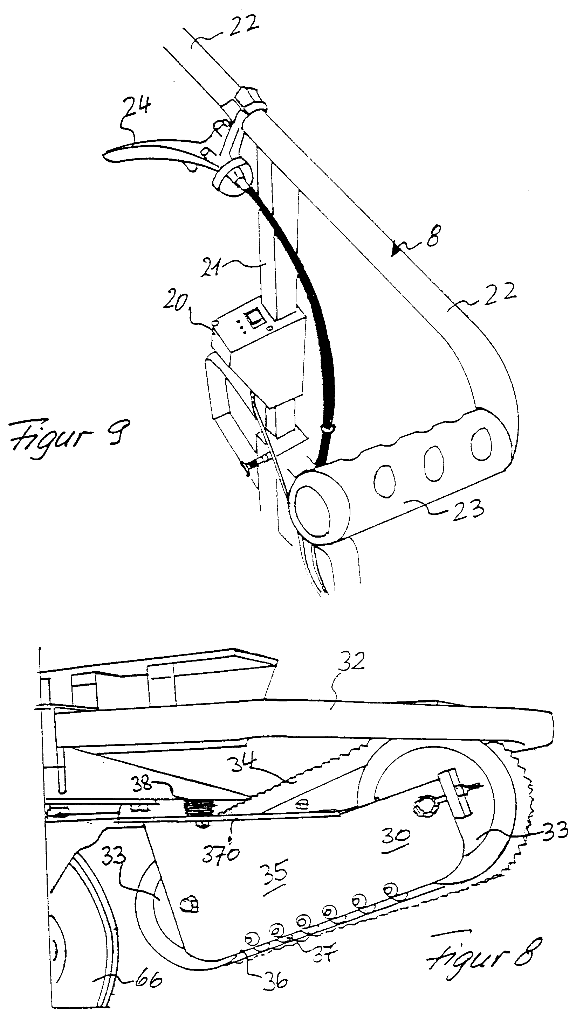

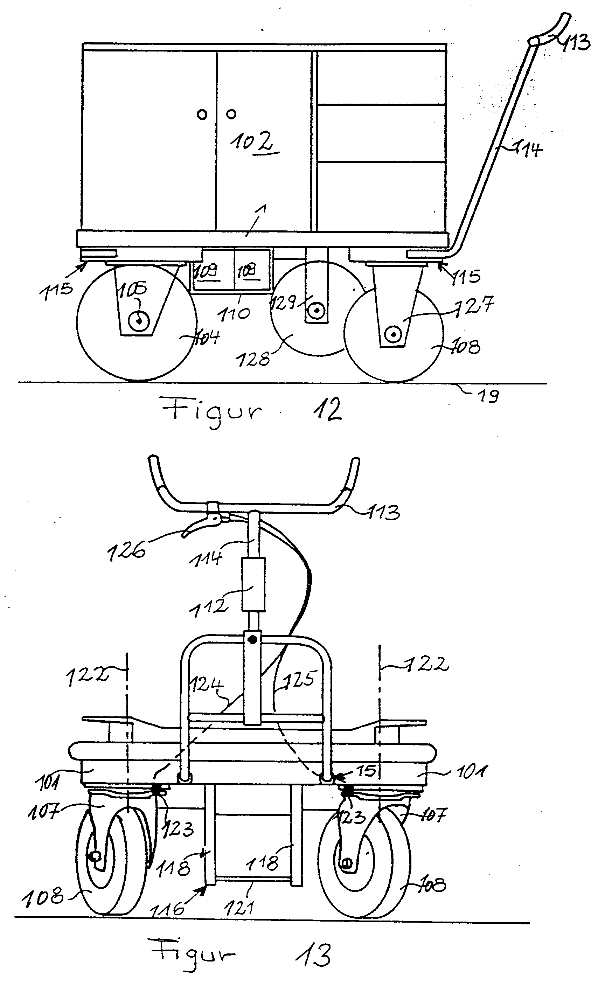

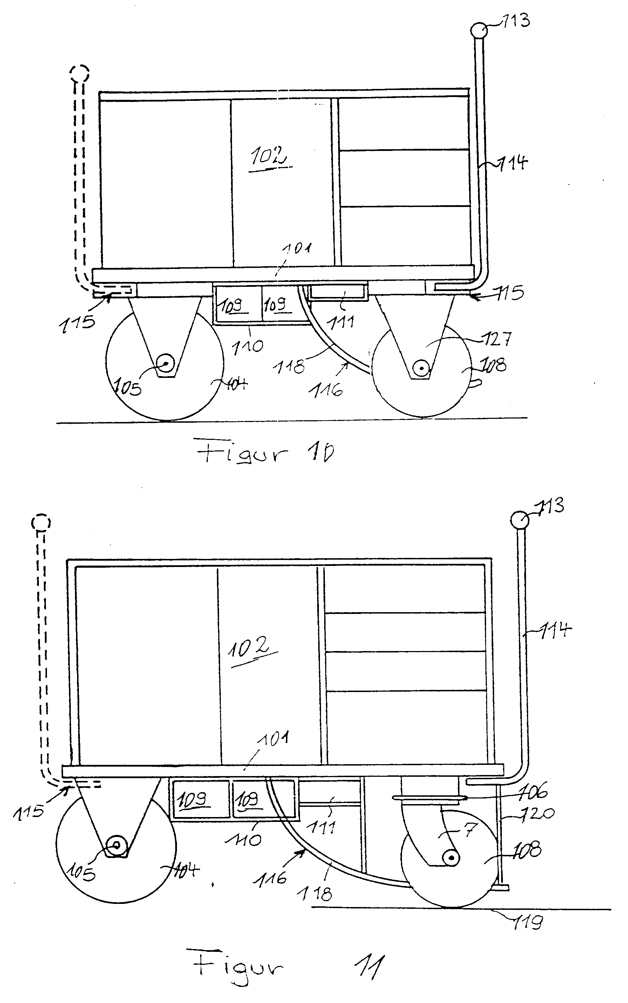

Anstelle in einer ihrer Rotationsachse gegenüber vorlaufenden oder nachlaufenden Ausrichtung feststellbarer Lenkrollen 108 kann hinsichtlich der geschleppten Achse aber auch deren Aufhängung an einer als starre, über ihrerseits starre Achsträger 127 an den Chassisrahmen 101 angeschlossenen Achse vorgesehen werden, wie dies in der Figur 1 dargestellt ist. Eine solche Starrachsausbildung der Aufhängung der Rollen 108 der geschleppten Achse gestattet die wahlweise Ausbildung des Wagens als gezogener und geschobener Wagen in einer einfachen Weise dadurch, daß die Anschlußeinrichtungen für die Achsträger 103 und 127 der beiden Achsen des Wagens untereinander gleich ausgestaltet sind, so daß auf eine Umsetzbarkait des Griffbügels 113 verzichtet werden kann, was eine doppelte Anordnung der Aufnahmen 115 erspart.

Bei der in der Figur 12 dargestellten Ausführungsform ist den beiden, die geschleppte Achse bildenden Rollen 108 eine Walze 128 vorgeschaltet, welche ihrerseits über im wesentlihen vertikal ausgerichtete Träger 129 an den Chassisrahmen 101 des Wagens angeschlossen ist und sich bis in den Bereich der Rollenauf standsebene 119 erstreckt, derart, daß beim Überwinden einer Bordsteinkante 118 die die geschleppte Achse bildenden Lenkrollen 108 im Zuge der Vorwärtsfahrt des Wagens allmählich auf die Höhe der höherliegenden Fahrbahnebene angehoben werden.

## Patentansprüche

1. Verteiler-bzw. Zustellerwagen, bestehend aus einem aus Rahmenholmen und Quertraversen gebildeten und mit einer einen Griffbügel (8, 113) aufweisenden Lenkeinrichtung ausgestatteten Wagenchassis (1, 101), welches über eine hintere Bockrollen (44, 104) tragende Laufachse (5, 105) und zwei voneinander unabhängige und um je eine vertikale Achse (122) schwenkbar am Wagenchassis (1, 101) aufgehängte vordere Lenkrollen (66, 108) gegen den Boden abgestützt und mit einem insbesondere kastenartigen Aufbau (2, 102) zur Aufnahme des zu transportierenden Zustell-oder Verteilgutes ausrüstbar ist, wobei wenigstens eine der Rollen (44, 104, 66, 108) seines Fahrwerkes vermittels eines Elektromotors (18) angetrieben ist und diesem eine unter Kontrolle einer Steuereinrichtung (17) stehende stufenlos regelbare Energieversorgung aus einer zugehörigen Energiequelle (16) zugeordnet ist, dadurch gekennzeichnet, daß das Fahrwerk des Wagens mit einer Hilfseinrichtung (30) zum Überwinden stufenförmiger Fahrbahnversetzungen (100, 117) ausgestattet ist und eine der beiden Achsen des Wagens als Antriebsachse und die andere als geschleppte Achse ausgebildet ist, wobei der wenigstens einer der Rollen einer Achse zugeordnete Elektromotor (18) durch einen unter Last anlaufenden und drehrichtungsumkehrbaren Elektromotor (18) gebildet ist und wobei die dem Elektromotor (18) zugeordnete Steuereinrichtung gleichzeitig wenigstens einen manuell betätigbaren Hauptschalter zum Ein-und Ausschalten der Energieversorgung und wenigstens eine Regeleinrichtung umfaßt, die gesteuert ist in Abhängigkeit von einem Kraftmesser, der die am Griffbügel (8, 113) angreifende Zug-oder Schubkraft und Lenkkraft erkennt und diese Kräfte in Steuersignale umsetzt.

2. Verteiler-bzw. Zustellerwagen nach Anspruch 1, dadurch gekennzeichnet, daß zusätzlich zu dem Hauptschalter ein der Regelung der Energieversorgung der Antriebsmotoren (18) zugeordneter manuell und stufenlos regelbarer Regelschalter vorgesehen ist.

3. Verteiler-bzw. Zustellerwagen nach Anspruch 1 oder 2, dadurch gekennzeichnet, daß die bzw. der wenigstens eine Elektromotor (18) als Radnabenmotor ausgebildet ist und daß in Verbindung mit der Anordnung des Gewichtes der Energiespeicher (16) im hinteren Bereich des Wagenchassis (1, 101) der wenigstens eine als Radnabenmotor ausgebildete Elektromotor (18) einer der hinteren Bockrollen (44, 104) des Wagens zugeordnet und die Energieversorgung des Elektromotors (18) über eine Schleifringanordnung bewerkstelligt ist.

4. Verteiler-bzw. Zustellerwagen nach Anspruch 1 und 2, dadurch gekennzeichnet, daß in Verbindung mit der Anordnung des Gewichtes der Energiespeicher (16) im hinteren Bereich des Wagenchassis (1, 101) der wenigstens eine als Radnabenmotor ausgebildete bürstenlose Elektromotor (18) einer der hinteren Bockrollen (44, 104) des Wagens zugeordnet und die Energieversorgung des Elektromotors (18) durch eine Hohlachse zugeführt ist.

5. Verteiler-bzw. Zustellerwagen nach Anspruch 1 und 2, dadurch gekennzeichnet, daß der wenigstens eine als Radnabenmotor ausgebildete Elektromotor (18) einer der vorderen Lenkrollen (66, 108) zugeordnet ist.

6. Verteiler-bzw. Zustellerwagen nach einem der Ansprüche 1 bis 4, dadurch gekennzeichnet, daß die beiden hinteren Bockrollen (44, 104) vermittels einer starren Achse (5, 105) und Achsträger (13) an das Wagenchassis (1, 101) angeschlossen sind und wenigstens eine der Bockrollen (44, 104) mittels eines Elektromotors (18) angetrieben ist.

7. Verteiler-bzw. Zustellerwagen nach Anspruch 6, dadurch gekennzeichnet, daß den beiden hinteren Bockrollen (44, 104) ein gemeinsamer Antriebsmotor (18) zugeordnet ist, wobei die Antriebsleistung des Motors vermittels eines Differentiales und zweier Antriebswellen auf die beiden hinteren Rollen übertragen wird.

8. Verteiler-bzw. Zustellerwagen nach einem der Ansprüche 1 bis 4, dadurch gekennzeichnet, daß jeder der beiden hinteren Bockrollen (44, 104) ein eigener als Radnabenmotor ausgebildeter Elektromotor (18) zugeordnet ist.

9. Verteiler-bzw. Zustellerwagen nach einem der Ansprüche 1 bis 8, dadurch gekennzeichnet, daß eine zwangsweise Regelung der Energieversorgung des oder der Antriebsmotoren (18) in Abhängigkeit von der am Griffbügel (8, 113) in Wagenlängsrichtung angreifenden bzw. ausgeübten Zug-oder Schubkraft vorgesehen ist, wobei die von einem die am Griffbügel (8, 113) ausgeübte bzw. angreifende Zug-oder Schubkraft erkennenden Sensor erzeugten Signale einem als elektronische Steuerschaltung (17) ausgebildeten Regelschalter zugeführt werden und die elektronische Steuerschaltung (17) die Energie-bzw. Stromversorgung für die einzelnen Radnabenmotoren (18) mehr oder minder stark auf- bzw. zuregelt.

10. Verteiler-bzw. Zustellerwagen nach einem der Ansprüche 1 bis 9, dadurch gekennzeichnet, daß der Griffbügel (8, 113) nach Art eines Fahrradlenkers gestaltet und vermittels eines einzigen Mittelholmes (21, 114) mit dem Wagenchassis (1, 101) verbunden ist und daß der die am Griffbügel (8, 113) angreifende bzw. ausgeübte Zug-oder Schubkraft erkennende und in ein Steuersignal umsetzende Sensor als Kraftmesser oder Dehnungsmesser ausgebildet und am Holm (21, 114) angeordnet ist.

11. Verteiler-bzw. Zustellerwagen nach einem der Ansprüche 1 bis 10, dadurch gekennzeichnet, daß die die Energieversorgung der beiden den hinteren Bockrollen ( 44, 104) des Wagens zugeordneten Antriebsmotoren (18) steuernde Steuerschaltung (17) mit einem Schaltungszweig zur unterschiedlichen Ansteuerung jedes der den beiden Bockrollen (44, 104) zugeordneten Elektromotors (18) in Abhängigkeit von einer zwischen den beiden Bockrollen (44, 104) auftretenden Drehzahldifferenz ausgestattet ist.

12. Verteiler-bzw. Zustellerwagen nach einem der Ansprüche 1 bis 11, dadurch gekennzeichnet, daß die Steuerschaltung (17) mit einem Schaltungszweig zur unterschiedlichen Ansteuerung jedes der den beiden Bockrollen (44, 104) zugeordneten Elektromotors (18) in Abhängigkeit von den Steuersignalen eines eine am Griffbügel (8, 113) ausgeübte Lenkkraft erkennenden Sensors ausgestattet ist.

13. Verteiler-bzw. Zustellerwagen nach einem der Ansprüche 1 bis 12, dadurch gekennzeichnet, daß die Steuerschaltung (17) mit einem Schaltungszweig zur Umschaltung der den beiden Bockrollen (44, 104) zugeordneten Elektromotoren (18) auf Generatorbetrieb in Abhängigkeit von den Steuersignalen eines eine Eigenbewegungstendenz des Wagens erkennenden Sensors ausgestattet ist.

14. Verteiler-bzw. Zustellerwagen nach einem der Ansprüche 1 bis 13, dadurch gekennzeichnet, daß die beiden Bockrollen (44, 104) des Wagens jeweils mit einer eigenständigen, vermittels eines Bremshebels (24) und Bowdenzüge einrückbaren, mechanischen und als Trommelbremse ausgebildeten Betriebs- und Feststellbremseinrichtung ausgestattet sind.

15. Verteiler-bzw. Zustellerwagen nach einem der Ansprüche 1 bis 14, dadurch gekennzeichnet, daß die Einrichtung zum Überwinden stufenförmiger Fahrbahnversetzungen, insbesondere von Bordsteinkanten (100, 117, eine den vorderen Lenkrollen (66, 108) gegenüber vorlaufend und zu der durch die Aufstandsebene der Lenk-und Bockrollen gebildeten Fahrebene unter einem Winkel von wenigstens 20° angestellte Rampe (30) sowie im Bereich zwischen Lenk-und Bockrollen angeordnete Hilfsrollen (31, 128) umfasst.

16. Verteiler-bzw. Zustellerwagen nach Anspruch 15, dadurch gekennzeichnet, daß die Rampe (30) innerhalb der lichten Weite eines Stoßbügels (32) angeordnet ist, wobei der Stoßbügel (32) in einer oberhalb der Achse der oberen Umlenkrolle (33) für den Stollenriemen (34) liegenden Ebene angeordnet ist.

17. Verteiler-bzw. Zustellerwagen nach Anspruch 15 und 16, dadurch gekennzeichnet, daß die Rampe (30) durch einen über zwei in einem Abstand voneinander angeordnete Umlenkrollen (33) geführten Stollenriemen (34) und einem die beiden Umlenkrollen (33) tragenden, gegen das Chassis (1, 101) des Wagens abgestützten Rahmen (35) gebildet ist, in welchen die beiden Umlenkrollen (33) in einer unter einem Winkel von wenigstens 20° gegenüber der Fahrebene des Wagens angestellten Ebene gelagert sind und dessen Unterkante parallel zu der Ebene verläuft, in der die beiden Umlenkrollen (33) gelagert sind.

18. Verteiler-bzw. Zustellerwagen nach einem der Ansprüche 1 bis 17, dadurch gekennzeichnet, daß jeweils beide Rollen (44, 104 bzw. 66, 108) einer Laufradachse des Wagens angetrieben sind und die angetriebenen Rollen der in Vorwärtsfahrtrichtung vorne liegenden Laufradachse zugeordnet sind, wobei die angetriebenen Rollen (44, 104 bzw. 66, 108) der Antriebsachse größer als oder wenigstens gleich groß sind wie die Rollen der geschleppten Achse.

19. Verteiler-bzw.Zustellerwagen nach einem der Ansprüche 1 bis 18, dadurch gekennzeichnet, daß das Wagenchassis (1, 101) an seinen beiden Stirnenden mit untereinander gleichen Einrichtungen (115) zum Anschluß eines Griffbügels (8, 113) samt Anschlüssen für die Regelung bzw. Steuerung der Energieversorgung des oder der die Rollen (44, 104 bzw. 66, 108) der Antriebsachse antreibenden Elektromotors (en) (18) sowie im Bereich seiner beiden Stirnenden mit untereinander gleichen Einrichtungen zum Anschluß bzw. Anbau einer Antriebsachse ausgestattet ist.

20. Verteiler-bzw.Zustellerwagen nach einem der Ansprüche 1 bis 19, dadurch gekennzeichnet, daß der geschleppten Achse eine die Unterseite des Wagenchassis (1,101) nach unten überragende Kufe (116) zugeordnet ist, welche wenigstens zwei Kufenbügel (118) umfaßt und der geschleppten Achse gegenüber vorlaufend beginnt.

21. Verteiler-bzw.Zustellerwagen nach einem der Ansprüche 1 bis 20, dadurch gekennzeichnet, daß die Rollen der geschleppten Achse durch Lenkrollen (66, 108) gebildet sind, welche vermittels eines Joches (7, 127) um eine zu ihrer Rotationsachse senkrechte Achse (122) schwenkbar am Wagenchassis (1, 101) aufgehängt sind und welche mittels einer Feststelleinrichtung (123) wahlweise ihrer Schwenkachse gegenüber vor- oder nachlaufend feststellbar sind.

22. Verteiler-bzw.Zustellerwagen nach Anspruch 21, dadurch gekennzeichnet, daß der Feststellung für die Lenkrollen (66, 108) der geschleppten Achse in ihrer ihrer Schwenkachse gegenüber vor-oder nachlaufenden Stellung eine aus einem am Griffbügel (113) angeordneten Handhebel (126) und Übertragungsmitteln, insbesondere Bowdenzügen (124, 125), bestehende Betätigungseinrichtung zugeordnet ist.

23. Verteiler-bzw. Zustellerwagen nach einem der Ansprüche 1 bis 22, dadurch gekennzeichnet, daß im Bereich zwischen Lenk-(66, 108)und Bockrollen (44, 104) angeordnete Hilfsrollen (31, 128) vermittels einer starren Achse (39) am Chassis (1, 101), insbesondere einem Batteriekasten (166), des Wagens aufgehängt sind.

24. Verteiler-bzw. Zustellerwagen nach Anspruch 23, dadurch gekennzeichnet, daß der Durchmesser der Hilfsrollen (31, 128) gleich groß, vorzugsweise kleiner ist als der Durchmesser der Bockrollen (44, 104) und daß die Achse (39) der Hilfsrollen (31, 128) zu den Lenkrollen (66, 108)einen größeren Abstand hat als zur Achse (5, 105) der Bockrollen (44, 104).

25. Verteiler-bzw. Zustellerwagen nach einem der Ansprüche 1 bis 24, dadurch gekennzeichnet, daß das Wagenchassis (1, 101) einen umlaufenden Ovalrohrrahmen und vermittels eines vorderen und eines hinteren Querträgers an diesen angeschlossene längsgerichtete Profilschienen (3 und 4) als Aufstandsfläche die den Wechselaufbau (2, 102) sowie einen an den Ovalrohrrahmen angeschlossenen Batteriekasten (166) und gleichfalls an den Ovalrohrrahmen angeschlossene starre Achsträger (13) für eine die beiden hinteren Bockrollen (44, 104) tragende starre Achse (5, 105) umfaßt.

## Claims

1. Despatch or delivery cart comprising a cart chassis (1, 101), which is formed from frame beams and cross struts and is equipped with a steering arrangement having a handle (8, 113), and which chassis is supported on the ground via a running axle (5, 105) bearing rear trestle rollers (44, 104) and two independent front steering rollers (66, 108) suspended on the cart chassis (1, 101) to pivot around a respective vertical axis (122), and may be equipped with an in particular box-shaped structure (2, 102) to receive the delivery or despatch goods to be transported, whereby at least one of the rollers (44, 104, 66, 108) of its running gear is driven by means of an electric motor (18) and an infinitely controllable energy supply under the control of a control means (17) from an associated energy source (16) is allocated to said electric motor, characterised in that the running gear of the cart is equipped with an auxiliary means (30) for overcoming step-type displacements in the travelling surface (100, 117) and one of the two axles of the cart is constructed as a driving axle and the other as trailing axle, whereby the electric motor (18) allocated to at least one of the rollers of an axle is formed by an electric motor (18), which starts under load and has reversible direction of rotation, and whereby the control means allocated to the electric motor (18) at the same time comprises at least one manually operated main switch for switching the energy supply on and off and at least one regulating means controlled in dependence on a dynamometer, which recognises the tensile or shearing force and steering force acting on the handle (8, 113) and converts these forces into control signals.

2. Despatch or delivery cart according to Claim 1, characterised in that a manually and infinitely controllable regulating switch allocated for regulation of the energy supply of the drive motors (18) is provided in addition to the main switch.

3. Despatch or delivery cart according to Claim 1 or 2, characterised in that the at least one electric motor or the electric motors (18) is/are in the form of a wheel hub motor or motors, and that in association with the arrangement of the weight of the energy storage means (16) in the rear region of the cart chassis (1, 101) the at least one electric motor (18) in the form of a wheel hub motor is allocated to one of the rear trestle rollers (44, 104) of the cart and the energy supply of the electric motor (18) is accomplished via a slip ring arrangement.

4. Despatch or delivery cart according to Claim 1 and 2, characterised in that in association with the arrangement of the weight of the energy storage means (16) in the rear region of the cart chassis (1, 101) the at least one brushless electric motor (18) in the form of a wheel hub motor is allocated to one of the rear trestle rollers (44, 104) of the cart and the energy supply of the electric motor (18) is fed through a hollow axle.

5. Despatch or delivery cart according to Claim 1 and 2, characterized in that the at least one electric motor (18) in the form of a wheel hub motor is allocated to one of the front steering rollers (66, 108).

6. Despatch or delivery cart according to one of Claims 1 to 4, characterized in that the two rear trestle rollers (44, 104) are connected to the cart chassis (1, 101) by means of a rigid axle (5, 105) and axle support (13) and at least one of the trestle rollers (44, 104) is driven by means of an electric motor (18).

7. Despatch or delivery cart according to Claim 6, characterised in that a joint drive motor (18) is allocated to the two rear trestle rollers (44, 104), whereby the required power of the motor is transmitted to the two rear rollers by means of a differential and two motor shafts.

8. Despatch or delivery cart according to one of Claims 1 to 4, characterised in that each of the two rear trestle rollers (44, 104) is assigned its own electric motor (18) in the form of a wheel hub motor.

9. Despatch or delivery cart according to one of Claims 1 to 8, characterised in that a forced regulation of the energy supply of the drive motor or motors (18) is provided in dependence on the tensile or shearing force acting or exerted on the handle (8, 113) in the longitudinal direction of the cart, whereby the signals generated by a sensor recognising the tensile or shearing force exerted or acting on the handle (8, 113) are passed to a regulating switch constructed as an electronic control circuit (17), and the electronic control circuit (17) controls the energy or power supply for the individual wheel hub motors (18) up or down to a greater or lesser extent.

10. Despatch or delivery cart according to one of Claims 1 to 9, characterised in that the handle (8, 113) is constructed in the manner of a bicycle handle bar and is connected to the cart chassis (1, 101) by means of a single central beam (21, 114), and that the sensor recognising the tensile or shearing force acting or exerted on the handle (8, 113) and converting it into a control signal is in the form of a dynamometer or strain gauge and is arranged on the beam (21, 114).

11. Despatch or delivery cart according to one of Claims 1 to 10, characterised in that the control circuit (17) controlling the energy supply of the two drive motors (18) allocated to the rear trestle rollers (44, 104) of the cart is fitted with a circuit branch for different actuation of each of the electric motors (18) allocated to the two trestle rollers (44, 104) in dependence on a speed difference occurring between the two trestle rollers (44, 104).

12. Despatch or delivery cart according to one of Claims 1 to 11, characterised in that the control circuit (17) is fitted with a circuit branch for different actuation of each of the electric motors (18) allocated to the two trestle rollers (44, 104) in dependence on the control signals of a sensor recognizing a steering force exerted on the handle (8, 113).

13. Despatch or delivery cart according to one of Claims 1 to 12, characterised in that the control circuit (17) is fitted with a circuit branch for conversion of the electric motors (18) allocated to the two trestle rollers (44, 104) to generator operation in dependence on the control signals of a sensor recognizing a tendency of the cart to move on its own.

14. Despatch or delivery cart according to one of Claims 1 to 13, characterised in that the two trestle rollers (44, 104) of the cart are respectively fitted with an independent, mechanical operating and locking brake arrangement constructed as a drum brake, which may be meshed by means of a brake lever (24) and Bowden cables.

15. Despatch or delivery cart according to one of Claims 1 to 14, characterised in that the means for overcoming step-type displacements in travelling surface, in particular curbstone edges (100, 117) comprises a ramp (30), which projects in front of the front steering rollers (66, 108) and is set at an angle of at least 20° to the running plane formed by the contact plane of the steering and trestle rollers, and also auxiliary rollers (31, 128) arranged in the region between steering and trestle rollers.

16. Despatch or delivery cart according to Claim 15, characterised in that the ramp (30) is arranged within the clear width of a bumper bar (32), whereby the bumper bar (32) is arranged in a plane lying above the axis of the upper deflection roller (33) for the support belt (34).

17. Despatch or delivery cart according to Claim 15 and 16, characterised in that the ramp (30) is formed by a support belt (34) guided over two deflection rollers (33) arranged at a distance from one another and a frame (35) supporting the two deflection rollers (33) and supported against the chassis (1, 101) of the cart, in said frame the two deflection rollers (33) are disposed in a plane set at an angle of at least 20° in relation to the running plane of the cart, its bottom edge running parallel to the plane in which the two deflection rollers (33) are disposed.

18. Despatch or delivery cart according to one of Claims 1 to 17, characterised in that both rollers (44, 104 or 66, 108) of a running axle of the cart are respectively driven and the driven rollers are allocated to the running axle located at the front in the direction of forward travel, whereby the driven rollers (44, 104 or 66, 108) of the driving axle are larger than or at least as large as the rollers of the trailing axle.

19. Despatch or delivery cart according to one of Claims 1 to 18, characterised in that the cart chassis (1, 101) is equipped at its two face ends with identical means (115) for connecting a handle (8, 113) including connections for the regulation and control of the energy supply of the electric motor or motors (18) driving the rollers (44, 104 or 66, 108) of the driving axle, and in the region of its two face ends is equipped with identical means for connection or attachment of a driving axle.

20. Despatch or delivery cart according to one of Claims 1 to 19, characterised in that a skid (116) protruding downwards beyond the underside of the cart chassis (1, 101) is allocated to the trailing axle, said skid comprising at least two skid bars (118) and projecting in front of the trailing axle.

21. Despatch or delivery cart according to one of Claims 1 to 20, characterised in that the rollers of the trailing axle are formed by steering rollers (66, 108), which are suspended by means of a yoke (7, 127) to pivot around an axis (122) perpendicular to their rotational axis on the cart chassis (1, 101), and which may be selectively locked by means of a locking means (123) to advance in front of or trail behind their pivot axis.

22. Despatch or delivery cart according to one of Claim 21, characterised in that an operating means comprising a hand lever (126) arranged on the handle (113) and transmission means, in particular Bowden cables (124, 125), is allocated for the locking arrangement for the steering rollers (66, 108) of the trailing axle in its position advancing in front of or trailing behind its pivot axis.

23. Despatch or delivery cart according to one of Claims 1 to 22, characterised in that auxiliary rollers (31, 128) arranged in the region between the steering rollers (66, 108) and trestle rollers (44, 104) are suspended by means of a rigid axle (39) on the chassis (1, 101), in particular on a battery case (166), of the cart.

24. Despatch or delivery cart according to one of Claim 23, characterised in that the diameter of the auxiliary rollers (31, 128) is equal in size to, preferably smaller than, the diameter of the trestle rollers (44, 104), and that the axle (39) of the auxiliary rollers (31, 128) is at a greater distance from the steering rollers (66, 108) than from the axle (5, 105) of the trestle rollers (44, 104).

25. Despatch or delivery cart according to one of Claims 1 to 24, characterised in that the cart chassis (1, 101) comprises a circumferential oval tube frame and longitudinally directed profile rails (3 and 4) connected thereto by means of a front and a rear cross strut as a contact surface for the alternative body (2, 102), and also a battery case (166) connected to the oval tube frame and rigid axle supports (13), likewise connected to the oval tube frame, for a rigid axle (5, 105) supporting the two rear trestle rollers (44, 104).

## Revendications

1. Véhicule de transport et de distribution constitué d'un châssis (1), (101) composé de longerons et de traverses et équipe d'un dispositif de guidage avec un cintre à poignées (8), (113), qui s'appuie sur le sol par un essieu (5), (105) portant des roues arrière non orientables (44), (104) et par deux roues avant de guidage (66), (108) indépendantes l'une de l'autre et suspendues chacune au châssis (1), (101) en étant mobile autour d'un axe vertical (122), et, qui peut être équipé d'une superstructure en forme de caisse (2), (102) destinée à recevoir les marchandises à transporter et à distribuer, étant observé qu'au moins une des roues (44), (104), (66), (108) du bogie est entrainée par un moteur électrique (18) auquel est associée une alimentation en énergie à partir d'une source d'énergie (16), contrôlée par un dispositif de commande (17) et réglable de manière progressive, *caractérisé en ce que*
• le bogie du véhicule est équipé d'un dispositif auxiliaire (30) pour surmonter les décalages de niveau en gradins (100), (117) de la surface de roulement,
• l'un des essieux du véhicule est un essieu menant tandis que l'autre est un essieu mené,
• le moteur électrique (18) associé à au moins l'une des roues d'un essieu est un moteur électrique à sens de rotation inversable et démarrant sous charge,
• le dispositif de commande (17) associé au moteur électrique comprend au moins un commutateur principal actionné à la main pour déclencher ou arrêter l'alimentation en énergie, et, au moins un dispositif de réglage fonctionnent en dépendance d'un dynamomètre qui reconnaît la force de traction ou de poussée et la force de guidage appliquées sur le cintre à poignées (8), (113) et qui transforme ces forces en signaux de commande.

2. Véhicule de transport et de distribution selon la revendication 1 *caractérisé en ce que* en plus du commutateur principal est prévu un commutateur de réglage permettant de régler manuellement et progressivement l'alimentation en énergie des moteurs électriques (18).

3. Véhicule de transport et de distribution selon les revendications 1 ou 2 *caractérisé en ce que* le/les moteur(s) électriques (18) sont des moteurs au moyeu de roue et *en ce que* en liaison avec la disposition du poids des accumulateurs d'énergie (16) dans la zone arrière du châssis (1), (101) du véhicule, au moins un moteur électrique (18) constitué d'un moteur au moyeu de roue est associé à l'une des roues arrière non orientables (44), (104) du véhicule, l'alimentation en énergie du moteur électrique (18) étant assurée par un disposif de bague collectrice

4. Véhicule de transport et de distribution selon les revendications 1 et 2 *caractérisé en ce que* en liaison avec la disposition du poids des accumulateurs d'énergie (16) dans la zone arrière du châssis (1), (101) du véhicule, au moins un moteur électrique (18) sans balai constitué d'un moteur au moyeu de roue est associé à l'une des roues arrière non orientables (44), (104) du véhicule, l'alimentation en énergie dudit moteur électrique (18) étant assurée à travers l'essieu creux portant les roues non orientables.

5. Véhicule de transport et de distribution selon les revendications 1 et 2 *caractérisé en ce que* au moins un moteur électrique (18) constitué d'un moteur au moyeu de roue est associé à l'une des roues avant de guidage (66), (108).

6. Véhicule de transport et de distribution selon l'une des revendications 1 à 4 *caractérisé en ce que* les ceux roues arrière non orientables (44), (104) sont assemblées avec le châssis (1), (101) du véhicule par un essieu rigide (5), (105) et des supports d'essieu (13), au moins l'une des roues arrière non orientables (44), (104) étant commandée par un moteur électrique (18).

7. Véhicule de transport et de dIstribution selon la revendication 6 *caractérisé en ce que* les deux roues arrière non orientables (4), (104) coopérent avec un moteur d'entraînement commun (18) dont la puissance motrice est transmise auxdites roues arrière par un différentel et deux arbres menants.

8. Véhicule de transport et de distribution selon l'une des revendications 1 à 4 *caractérisé en ce que* chacune des roues arrière non orientables (44), (104) coopère avec un moteur électrique propre (18) constitué d'un moteur au moyeu de roue.

9. Véhicule de transport et de distribution selon l'une des revendications 1 à 8 *caractérisé en ce que* le réglage de l'alimentation en énergie du/des moteur(s) électrique(s) (18) est un réglage forcée dépendant de la force de traction ou de poussée exercée par, respectivement appliquée sur le cintre à poignées (9), (113) en direction longitudinale du véhicule, *en ce que* les signaux émis par un capteur qui reconnaît la force de traction ou de poussée exercée par, respectivement appliquée sur le cintre à poignées (8), (113), sont transmis à un commutateur de réglage constitué d'un commutateur de commande électronique (17) qui règle l'alimentation en énergie, respectivement en courant électrique, de chaque moteur au moyeu de roue (18).

10. Véhicule de transport et de distribution selon l'une des revendications 1 à 9 *caractérisé en ce que* le cintre à poignées (8), (113) présente la forme d'un guidon et est assemblé avec le châssis (1), (101) du véhicule par l'intermédiaire d'un montant central unique (21), (114) et *en ce que* le capteur qui reconnaît la force de traction ou de poussée exercée, respectivement appliquée sur le cintre à poignées (8), (113) et la transforme en un signal de commande, est constitué d'un dynamomètre ou d'un extensomètre disposé sur le montant (21), (114).

11. Véhicule de transport et de distribution selon l'une des revendications 1 à 10 *caractérise en ce que* le commutateur de commande (17) qui commande l'alimentation en énergie des moteurs (18) associés aux deux roues arrière non orientables (44) (104) du véhicule, est équipe d'un branchement pour commander différemment chacun des moteurs électriques (18) coopérant avec les deux roues non orientables (44), (104) en dépendance d'une différence de la vitesse de rotation des deux roues non orientables (44), (104).

12. Véhicule de transport et de distribution selon l'une des revendications 1 à 11 *caractérisé en ce que* le commutateur de commande (17) est équipé d'un branchement pour commander différemment chacun des moteurs électriques (18) coopérant avec les deux roues non orientables (44), (104), en dépendance des signaux de commande émis par un capteur qui reconnaît la force de guidage exercée sur le cintre à poignées (8), (113).

13. Véhicule de transport et de distribution selon l'une des revendications 1 à 12 *caractérisé en ce que* le commutateur de commande (17) est équipé d'un branchement pour mettre les moteurs électriques (18) coopérant avec les deux roues non orientables (44), (104) en régime de génératrice, en dépendance des signaux de commande émis par un capteur qui reconnaît la tendance à des mouvements propres du véhicule.

14. Véhicule de transport et de distribution seion l'une des revendications 1 à 13 *caractérisé en ce que* les deux roues non orientables (44), (104) du véhicule sont équipées d'un dispositif de freinage et d'arrêt, autonome et mécanique, constitué d'un frein à tambour actionné par un levier de frein (24) et des câbles Bowden.

15. Véhicule de transport et de distribution selon l'une des revendications 1 à 14 *caractérisé en ce que* le dispositif pour surmonter les décalages de niveau en gradins de la surface de roulement, en particulier les bords de trottoirs, comporte, d'une part, une rampe (30) disposée devant les roues avant de guidage (66), (108) et inclinée d'un angle d'au moins 20° sur le plan de roulement correspondant à la surface de contact formée par les roues de guidage et les roues non orientables, et, d'autre part, de roues auxiliaires (31), (128) disposées dans la zone située entre les roues de guidage et les roues de transport.

16. Véhicule de transport et de distribution selon la revendication 15 *caractérisé en ce que* la rampe (30) est placée à l'intérieur de l'ouverture d'un étrier (32) parechocs qui se trouve dans un plan situé au-dessus de l'axe de la roue supérieure de renvoi (33) de la courroie courroie (34).

17. Véhicule de transport et de distribution selon les revendications 15 et 16 *caractérisé en ce que* la rampe (30) est constituée, d'une part, d'une courroie crantée (34) courant autour de deux roues de renvoi (33) disposées à une certaine distance l'une de l'autre et, d'autre part, d'un cadre (35) portant les roues de renvoi (33) et s'appuyant sur le châssis (1), les deux roues de renvoi (33) étant montées dans le cadre (35) dans un plan incliné d'au moins 20° sur le plan de roulement du véhicule et le bord inférieur (36) dudit cadre étant parallèle au plan de montage des deux roues de renvoi (33).

18. Véhicule de transport et de distribution selon l'une des revendications 1 à 17 *caractérisé en ce que* les deux roues (44), (104), respectivement (66), (108) d'un essieu du véhicule sont motrices, *en ce que* les roues motrices sont associées à l'essieu situé à l'avant en direction d'avancement du véhicule et *en ce que* les roues motrices (44), (104), respectivement (66), (108) de l'essieu menant sont plus grandes ou au moins aussi grandes que les roues de l'essieu mené.

19. Véhicule de transport et de distribution selon l'une des revendications 1 à 18 *caractérisé en ce que* le châssis (1), (101) du véhicule est équipé à ses deux extrémités frontales, d'une part, de dispositifs identiques (115) pour le montage du cintre à poignées (8), (113) y compris des raccords pour le réglage, respectivement la commande de l'alimentation en énergie du ou des moteurs électriques (18) entraînant l'essieu menant et, d'autre part, de dispositifs identiques pour le montage d'un essieu menant.

20. Véhicule de transport et de distribution selon l'une des revendications 1 à 19 *caractérisé en ce que* l'essieu traîné est associé à un patin (116) saillant sur la face inférieure du châssis (1), (101) du véhicule, comprenant au moins deux étriers (118) et disposé devant l'essieu mené.

21. Véhicule de transport et de distribution selon l'une des revendications 1 à 12 *caractérisé en ce que* les roues de l'essieu mené sont des roues de guidage (66), (108) qui sont suspendues par l'intermédiaire d'une fourche (7), (127) sur le châssis (1), (101) du véhicule en étant articulées autour d'un axe (122) perpendiculaire à leur axe de rotation et qui peuvent être bloquées par un dispositif d'arrêt (123) au choix dans une position située devant ou derrière leur axe d'articulation.

22. Véhicule de transport et de distribution selon la revendication 21 *caractérisé en ce que* le blocage des roues de guidage (66), (108) de l'essieu mené dans leur position devant ou derrière leur axe d'articulation est assuré par l'intermédiaire d'un dispositif d'actionnement composé d'un lever à main (126) prévu sur le cintre à poignées (8), (113) et de moyens de transmission, en particulier de câbles Bowden (124), (125).

23. Véhicule de transport et de distribution seion l'une des revendications 1 à 22 *caractérisé par* des roues auxiliaires (31), (128) prévues dans la zone située entre les roues de guidage (66), (108) et les roues non orientables (44), (104) et suspendues, par l'intermédiaire d'un axe rigide (39), au châssis (1), (101) du véhicule, en particulier à une caisse de batteries (166).

24. Véhicule de transport et de distribution selon la revendication 23 caractérisé *en ce que* le diamètre des roues auxiliaires (31), (128) est égal, mais de préférence inférieur à celui des roues non orientables (44), (104) et *en ce que* l'axe (39) des roues auxiliaires (31), (128) est prévu à une plus grande distance des roues de guidage (66), (108) que de l'axe (5), (105) des roues non orientables (44), (104).

25. Véhicule de transport et de distribution selon l'une des revendications 1 à 24 *caractérisé en ce que* le châssis (1), (101) du véhicule qui sert de surface de base à la superstructure (2), (102), comporte un cadre tubulaire ovale continu et des barres profilées (3), (4) longitudinales assemblées avec le cadre ovale par l'intermédiaire d'une traverse avant et d'une traverse arrière ainsi qu'une caisse de batterie (166) montée sur le cadre tubulaire ovale et des supports d'essieu rigides (13) également montés sur le cadre tubulaire et destinés à l'essieu rigide (5), (105) portant les deux roues arrière non orientables (44), (104).
